# EUROPÄISCHE PATENTSCHRIFT

(11) **EP 1 789 485 B1**
(45) Veröffentlichungstag und Bekanntmachung des Hinweises auf die Patenterteilung: **05.11.2008**
(21) Anmeldenummer: 05750672.7
(22) Anmeldetag: 16.06.2005
(51) Int. Cl.: C08K 3/00, C08J 3/22

(54) **SCHWER ENTFLAMMBARE PLATTENMATERIALIEN MIT METALLIC-EFFEKT**
FIRE-RETARDING SHEET MATERIAL HAVING A METALLIC EFFECT
MATERIAUX EN PLAQUE PEU INFLAMMABLES A EFFET METALLIQUE

(30) Priorität: 30.08.2004 DE 102004042095
(43) Veröffentlichungstag der Anmeldung: 30.05.2007
(73) Patentinhaber: Evonik Röhm GmbH, 64293 Darmstadt (DE)
(72) Erfinder: BUMANN, Detlef, 64665 Alsbach-Hähnlein (DE)
(86) Internationale Anmeldenummer: PCT/EP2005/006452
(87) Internationale Veröffentlichungsnummer: WO 2006/024331

(56) Entgegenhaltungen:
- EP-A- 0 932 024
- US-A1- 2003 148 093
- DEGUSSA - RÖHM PLEXIGLAS: "Europlex F, Europlex PPSU" FLAME RETARDANT SHEET PRODUCTS FOR AIRCRAFT APPLICATIONS, Juni 2004 (2004-06), XP002338494
- A. JAMES: "Full House" AIRCRAFT INTERIORS INTERNATIONAL, Juni 2004 (2004-06), Seite 64-66,69-71,73,74, XP002338495

## Beschreibung

### Gebiet der Erfindung

Die Erfindung betrifft Kunststoffformkörper, die eine Metallicoberfläche aufweisen und ihre Verwendung beim Innenausbau von Luftfahrzeugen finden.

### Stand der Technik

Kunststoffformkörper für den Innenausbau von Luftfahrzeugen sind bekannt und werden unter dem Namen Europlex^{®} F und Europlex^{®} PPSU von der Röhm GmbH & Co. KG in den Handel gebracht.

Bei Europlex^{®} F handelt es sich um gedeckt eingefärbte schlagzähe, flammgeschützte Polycarbonat (PC)-Typen, bei Europlex^{®} PPSU handelt es sich ebenfalls um gedeckt eingefärbte schlagzähe, flammgeschützte Polyphenylsulphone (PPSU), die den OSU 65/65-Test erfüllen (Heat Release-Test gemäß FAR 25.853). PC erfüllt die FAR 25.853 (a) (1) (i), (a) (1) (ii) sowie die Anforderungen hinsichtlich Rauchdichte und Toxizität, PPSU erfüllt zusätzlich die FAR 25.853 (c).

Die Tafeln werden in Dicken von 0,8 mm - 8,0 mm geliefert, die Breite beträgt maximal 1.400 mm. Aus den Tafeln werden u. a. Sitzverkleidungen, Tabletts, Tür- und Türrahmenabdeckungen und Lampengehäuse gefertigt.

### Aufgabe

Bisher waren Metallic-Lackierungen üblich, um die gedeckten, auf nicht transparenten Formmassen basierenden Kunststoffformkörper aus Europlex^{®} F oder Europlex^{®} PPSU mit Metallic-Dekor zu versehen. Lackierungen haben aber den Nachteil, nicht allzu kratz- und stoßfest zu sein, so dass die lackierten Gegenstände im Alltagsbetrieb der Flugzeugkabine schnell unansehnlich werden.

Die Verwendung von herkömmlichen Metallpigmenten in gedeckten oder opaken Basisformmassen erzielt naturgemäß nicht den Effekt einer Lackierung. Darüber hinaus verschlechtern herkömmliche Metallic-Pigmente auf der Basis von feingemahlenen Metallteilchen aufgrund ihrer Dochtwirkung das Brandverhalten der damit ausgerüsteten Kunststoffformkörper.

### Aufgabe

Es bestand daher die Aufgabe, eine Formmasse mit z. B. typischem Metallic-Effekt für Kunststoffformkörper zu entwickeln, die die Brandeigenschaften der Kunststoffformkörper nicht so verschlechtert, dass diese Kunststoffformkörper nicht im Flugzeugausbau eingesetzt werden können. Darüber hinaus sollte die Metallic-OberFläche robust gegen die üblichen Beanspruchungen in einer Flugzeugkabine sein. Der Farbeindruck der Metallic-Oberfläche sollte z. B. den Tönen RAL 9006/9007 entsprechen. Die verwendeten Pigmente sollten bei der Verarbeitungstemperatur von PPSU (ca. 350° C - 380° C Schneckentemperatur bei der Extrusion) stabil sein.

Mit gedeckt eingefärbten Basismaterialien (oder opak) wird keine hinreichende Metallic-Wirkung erzielt (Effekt wird abgedeckt). Auf Basis transparenter BasisFormmassen ist die Ausgangssituation besser, jedoch existiert das Problem der Beeinflussung des Brandverhaltens auch hier.

### Lösung

Die Aufgaben werden durch einen flammgeschützten Kunststoffformkörper basierend auf transparenten, flammgeschützten PC und PPSU-Formmassen mit metallisch wirkender Oberfläche gelöst, wobei als Pigment ein Iriodin^{®}-Pigment plus ggf. farbtonbeeinflussende Farbmittel verwendet werden.

### Ausführung der Erfindung

Als Kunststoffe für den Kunststoffformkörper kommen neben transparentem flammgeschützten Polycarbonat (PC) auch Polysulfone (PSU), Polyphenylsulphone (PPSU) und Polyethersulfone (PES) in Betracht (Hersteller: Bayer AG, BASF, Solvay).

Die Pigmente Iriodin^{®} werden von der Merck KGaA in den Handel gebracht.

Die Einarbeitung der Iriodin^{®}-Pigmente erfolgt beispielsweise in Form eines Masterbatches aus dem entsprechenden Kunststoff und dem Iriodin^{®}-Pigment. Der Masterbatch besteht aus 2 - 50 Gew.-% Iriodin^{®}-Pigment, der Rest ist Kunststoffgranulat. Gegebenenfalls können noch die üblichen Hilfsstoffe oder farbgebende Farbmittel zugefügt werden.

Zur Extrusion des Kunststoffformkörpers wird soviel Masterbatch zur Kunststoffformmasse hinzugegeben, dass die Menge an Iriodin^{®}-Pigment der in der Rezeptur vorgegebenen Menge entspricht.

Die Extrusion der erfindungsgemäßen Zusammensetzung zu Platten erfolgt auf einem üblichen Extruder.
Die Schmelzetemperatur beträgt im Fall von PPSU ca. 350° - 380° C, die Temperatur des Glättwerks ca. 180° C, im Falle von Polycarbonat beträgt die Schmelzetemperatur ca. 270 - 280° C und die des Glättwerks ca. 120° C.

Der Kunststoffformkörper kann durch übliche Verfahren wie Tiefziehen oder Thermoformen weiter umgeformt werden.

Durch Variation der Konzentration von Iriodin^{®}-Pigment und Farbe können die Metalle Gold, Silber, Altsilber oder Kupfer dargestellt werden.

### Beispiele:

### Beispiel 1

### Zusammensetzung

| | |
|---|---|
| PPSU-Formmasse, transparent | 98,799 % |
| (Europlex PPSU 99470) | |
| Iriodin 123 hellglanzsatin | 1 % |
| Colortek OT-0005-BON | 0,2 % |
| Printex^{®} 60 (Degussa) | 0,001 % |

Aus der Mischung wurden 1,5 mm dicke Platten extrudiert.

### Beispiel 2

Aus der gleichen Mischung wie in Beispiel 1 wurden 1 mm dicke Platten extrudiert.

### Beispiel 3

Aus der gleichen Mischung wie im Beispiel 1 wurden 2,0 mm dicke Platten extrudiert.

### Vergleichsbeispiel 4

### Zusammensetzung

| | |
|---|---|
| PPSU-Formmasse, transparent | 99,00 % |
| (Europlex PPSU 99470) | |
| | |
| **Metallpigment** | 1,0 % |

In die gleiche Mischung wie in Beispiel 1 wurde in Beispiel 4 anstelle von Iriodin^{®} ein kommerziell erhältliches Metallschliffpulver (Metallpigment) eingearbeitet und zu Platten von 1,5 mm Dicke extrudiert.

### Vergleichsbeispiel 5

Die gleiche Mischung, auch Metallpigment, wie in Beispiel 4 wurde zu 1,5 mm dicken Platten extrudiert.

### Ergebnisse des Wärmeentwicklungstests nach FAR 25.853

| | | HR-Grenzwert | HRR-Grenzwert | |
|---|---|---|---|---|
| Beispiel | Probe | (KW min/m²) | (KW/m²) | Anforderungen sind: |
| 1 | 1 | 17,21 | 52,22 | Erfüllt |
| | 2 | 22,63 | 48,04 | |
| | 3 | 4,66 | 34,27 | |
| | | | | |
| 2 | 1 | 16,80 | 37,48 | Erfüllt |
| | 2 | 10,95 | 22,64 | |
| | 3 | 33,60 | 41,08 | |
| | | | | |
| 3 | 1 | - 5,92 | 50,03 | Erfüllt |
| | 2 | - 0,45 | 58,59 | |
| | 3 | - 3,30 | 56,94 | |
| | | | | |
| Vergl.bsp. 4 | 1 | 144,68 | 157,73 | Nicht erfüllt |
| | 2 | 125,28 | 137,70 | |
| | 3 | 144,15 | 162,67 | |
| | | | | |
| Vergl.bsp. 5 | 1 | 158,63 | 154,31 | Nicht erfüllt |
| | 2 | 173,26 | 179,95 | |
| | 3 | 123,61 | 131,62 | |

Die Wärmeentwicklung der Proben (gemessen in KW min/m² / KW/m²) bleibt bei Verwendung der erfindungsgemäßen Zusammensetzung deutlich unter den vorgeschriebenen Grenzwerten von 65/65 KW min/m² / KW/m² (HR/HRR).

## Patentansprüche

1. Flammgeschützter Kunststoffformkörper aus transparentem, flammgeschützten Polycarbonat (PC) oder Polyphenylsulfon (PPSU) mit metallisch wirkender Oberfläche,
**dadurch gekennzeichnet,**
**dass** als Pigment ein Iriodin^{®}-Pigment verwendet wird.

2. Flammgeschützter Kunststoffformkörper nach Anspruch 1,
**dadurch gekennzeichnet,**
**dass** die Mengen an Iriodin^{®}-Pigment zwischen 0,1 Masse-% und 10 Masse-%, bezogen auf die Formmasse, aus der der Kunststoffformkörper hergestellt wird, beträgt.

3. Verfahren zur Herstellung eines flammgeschützten Kunststoffformkörpers nach Anspruch 1,
**dadurch gekennzeichnet,**
**dass** man die erforderliche Menge an Iriodin^{®}-Pigment in einem Masterbatch zur Formmasse zufügt und in an sich bekannter Weise zu Kunststoffformkörpern extrudiert.

4. Verfahren nach Anspruch 3,
**dadurch gekennzeichnet,**
**dass** der Kunststoffformkörper eine Dicke zwischen 1,0 mm und 12 mm aufweist.

5. Flammgeschützter Kunststoffformkörper nach Anspruch 1,
**dadurch gekennzeichnet,**
**dass** er einen Farbeindruck nach RAL 9007 HR aufweist.

6. Flammgeschützter Kunststoffformkörper nach Anspruch 1,
**dadurch gekennzeichnet,**
**dass** er einen Farbeindruck nach RAL 9006 HR aufweist.

## Claims

1. Flame-retardant plastics moulding composed of transparent, flame-retardant polycarbonate (PC) or polyphenyl sulphone (PPSU) with metallic-effect surface,
**characterized in that**
the pigment used comprises an Iriodin® pigment.

2. Flame-retardant plastics moulding according to Claim 1,
**characterized in that**
the amounts of Iriodin® pigment, based on the moulding composition from which the plastics moulding is produced, are from 0.1 to 10% by weight.

3. Process for production of a flame-retardant plastics moulding according to Claim 1,
**characterized in that**
the required amount of Iriodin® pigment in a masterbatch is added to the moulding composition and is extruded in a manner known per se to give plastics mouldings.

4. Process according to Claim 3,
**characterized in that**
the thickness of the plastics moulding is from 1.0 to 12 mm.

5. Flame-retardant plastics moulding according to Claim 1,
**characterized in that**
its perceived colour is in accordance with RAL 9007 HR.

6. Flame-retardant plastics moulding according to Claim 1,
**characterized in that**
its perceived colour is in accordance with RAL 9006 HR.

## Revendications

1. Corps moulé en matière plastique ignifugé, à base de polycarbonate (PC) transparent ignifugé ou de polyphénylsulfone (PPSU) transparente ignifugée, à surface à effet métallique, **caractérisé en ce qu'**un pigment Iriodin® est utilisé en tant que pigment.

2. Corps moulé en matière plastique ignifugé, selon la revendication 1, **caractérisé en ce que** les quantités de pigment Iriodin® sont comprises entre 0,1 % en masse et 10 % en masse, par rapport à la matière à mouler à partir de laquelle est fabriqué le corps moulé en matière plastique.

3. Procédé pour la fabrication d'un corps moulé en matière plastique ignifugé, selon la revendication 1, **caractérisé en ce qu'**on ajoute à la matière à mouler la quantité requise de pigment Iriodin®, dans un mélange-maître et on l'extrude d'une façon connue en soi, en corps moulés en matière plastique.

4. Procédé selon la revendication 3, **caractérisé en ce que** le corps moulé en matière plastique a une épaisseur comprise entre 1,0 mm et 12 mm.

5. Corps moulé à base de matière plastique ignifugé, selon la revendication 1, **caractérisé en ce qu'**il présente un effet de couleur selon RAL 9007 HR.

6. Corps moulé à base de matière plastique ignifugé, selon la revendication 1, **caractérisé en ce qu'**il présente un effet de couleur selon RAL 9006 HR.
